# FASCICULE DE BREVET EUROPEEN

(11) **EP 3 596 414 B1**
(45) Date de publication et mention de la délivrance du brevet: **03.05.2023**
(21) Numéro de dépôt: 18716123.7
(22) Date de dépôt: 15.03.2018
(51) Int. Cl.: F25J 1/00, F25J 5/00, F28B 1/06, F28D 5/00, F02C 3/30, F25B 11/00, F25J 1/02

(54) **INSTALLATION DE LIQUÉFACTION DE GAZ NATUREL DISPOSÉE EN SURFACE D'UNE ÉTENDUE D'EAU, ET PROCÉDÉ DE REFROIDISSEMENT ASSOCIÉ**
SCHWIMMENDE EINRICHTUNG ZUR VERFLÜSSIGUNG VON ERDGAS UND ENTSPRECHENDES KÜHLVERFAHREN
FLOATING INSTALATION FOR LIQUEFYING NATURAL GAS AND RESPECTIVE COOLING METHOD

(30) Priorité: 16.03.2017 FR 1752150
(43) Date de publication de la demande: 22.01.2020
(73) Titulaire: Technip France, 92400 Courbevoie (FR)
(72) Inventeur: BERTHELOT, Pierre, 92973 Paris La Defense Cedex (FR); HAGYARD, Philip, 92973 Paris La Defense Cedex (FR)
(74) Mandataire: Lavoix
(86) Numéro de dépôt international: PCT/EP2018/056565
(87) Numéro de publication internationale: WO 2018/167223

(56) Documents cités:
- EP-A1- 1 698 847
- WO-A1-2015/140044
- CH-A5- 692 759
- JP-A- 2002 122 387
- US-A1- 2009 090 131
- US-A1- 2009 115 080
- US-A1- 2010 218 537
- US-A1- 2010 282 439
- US-A1- 2016 238 312
- DIERKS G: "Luftgekuhlte Ruckkuhlsysteme", KAELTE UND KLIMATECHNIK, GENTNER, STUTTGART, DE, 1 mars 2000 (2000-03-01), pages 1-8, XP003028167, ISSN: 0343-2246

## Description

La présente invention concerne une installation de liquéfaction de gaz naturel selon le préambule de la revendication 1.

Une telle installation est destinée notamment à liquéfier du gaz naturel produit à partir d'un réservoir situé sous une étendue d'eau, ou à terre, et qui est convoyé jusqu'à l'installation.

L'installation est avantageusement une installation flottant sur l'étendue d'eau, telle qu'une plate-forme ou une barge portant une unité de liquéfaction de gaz naturel, désignée par le terme anglais « Floating Liquefied Natural Gas » ou « FLNG ».

Une telle installation est destinée notamment à produire du gaz naturel, à liquéfier le gaz naturel produit, puis à stocker et/ou à transférer le gaz naturel liquéfié sur un méthanier ou autre barge de transport. Ceci simplifie le transport du gaz vers les lieux de consommation, en réduisant le volume transporté. En outre, la disposition des installations en mer éloigne les risques liés à une telle installation des zones habitées et diminue l'impact sur l'environnement.

Afin de mettre en oeuvre de manière économique un procédé de liquéfaction de gaz naturel, les unités de liquéfaction rejettent une grande quantité de chaleur dans le milieu environnant, en pratique dans l'air ou dans l'eau.

De nombreuses unités de liquéfaction de gaz naturel ont été construites à terre depuis les années 1960. Les techniques de refroidissement employées à terre ne donnent pas entièrement satisfaction lorsqu'elles transposées en mer.

L'avantage d'une installation de liquéfaction de gaz naturel flottant est qu'elle dispose par nature d'une source d'eau de refroidissement en grande quantité et à basse température. Par conséquent, il est connu de faire circuler de l'eau prélevée dans l'étendue d'eau pour le refroidissement des équipements de l'unité de liquéfaction, soit directement, soit par l'intermédiaire d'une boucle d'eau douce. Ceci requiert de disposer d'un réseau d'eau de refroidissement encombrant et lourd sur l'installation, ainsi que d'une importante prise d'eau de mer.

Pour pallier ces problèmes, il est possible d'utiliser des échangeurs de refroidissement à air. De tels échangeurs ne nécessitent pas d'amener de l'eau dans l'installation. Ils sont cependant très encombrants pour offrir une surface d'échange suffisante.

Un réseau de refroidissement par circulation d'eau sur échangeurs ou un refroidissement à l'air ne donnent pas entière satisfaction, du fait que l'espace disponible sur une installation flottante est réduit par rapport à une unité de liquéfaction similaire à terre. La capacité de liquéfaction de l'installation est donc limitée pour accommoder l'ensemble des équipements sur l'installation flottante. En outre, l'eau réchauffée produite en grande quantité par l'installation doit être rejetée dans l'étendue d'eau, ce qui peut engendrer un impact sur l'environnement.

Il est connu que le refroidissement par évaporation d'eau est efficace et compact. A terre, il est économique de fournir un bassin de rétention sous les tours de refroidissement et de pratiquer une évaporation partielle d'une eau chargée en sels et autres résidus secs.

Pour réduire l'encombrement, WO2015/140044, qui divulgue le préambule de la revendication 1, décrit une installation flottante de production de gaz naturel liquéfié, munie d'échangeurs thermiques à air qui sont tous alimentés par une conduite centralisée d'amenée d'air disposée au bord de la coque. Ceci assure que l'air fourni à chacun des échangeurs thermiques est de l'air frais, et non de l'air ayant déjà circulé dans un échangeur thermique.

Dans un mode de réalisation particulier, des gouttelettes d'eau sont pulvérisées à l'entrée du conduit d'alimentation pour refroidir et humidifier l'air entrant. Les gouttelettes d'eau s'évaporent dans le conduit et le flux d'air alimentant les échangeurs thermiques est dépourvu de gouttelettes liquides.

Une telle installation améliore donc la capacité de refroidissement, mais reste significativement encombrante, ce qui affecte la capacité de production en gaz naturel liquéfié.

US 2016/238312 décrit également une installation de production de gaz naturel liquéfié, munie d'échangeurs thermiques à air.

Un but de l'invention est d'augmenter encore la capacité de production d'une installation flottante de liquéfaction de gaz naturel, tout en limitant l'encombrement de l'installation.

À cet effet, l'invention a pour objet une installation selon la revendication 1.

Suivant des modes particuliers de réalisation, l'installation selon l'invention comprend l'une ou plusieurs des caractéristiques des revendications 2 à 9 ou des caractéristiques suivantes, prise(s) isolément ou suivant toute combinaison techniquement possible :
- l'ensemble de dessalement comporte un système de production d'eau pure, par exemple par osmose inverse, un système de filtration, et/ou une finition (« polishing » en anglais).

L'invention a également pour objet un procédé de refroidissement d'un flux selon la revendication 10.

Suivant des modes particuliers de réalisation, le procédé selon l'invention comprend l'une ou plusieurs des caractéristiques des revendications 11 à 14, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- la figure 1 est une vue schématique d'une première installation flottante de liquéfaction de gaz naturel selon l'invention ; et
- la figure 2 est une vue schématique d'un détail d'un échangeur thermique de refroidissement à l'air de l'installation de la figure 1.
- les figures 3 à 6 sont des vues analogues à la figure 1 illustrant des variantes d'installation selon l'invention.

Dans tout ce qui suit, les termes « amont » et « aval » s'entendent par rapport au sens normal de circulation d'un flux dans un conduit.

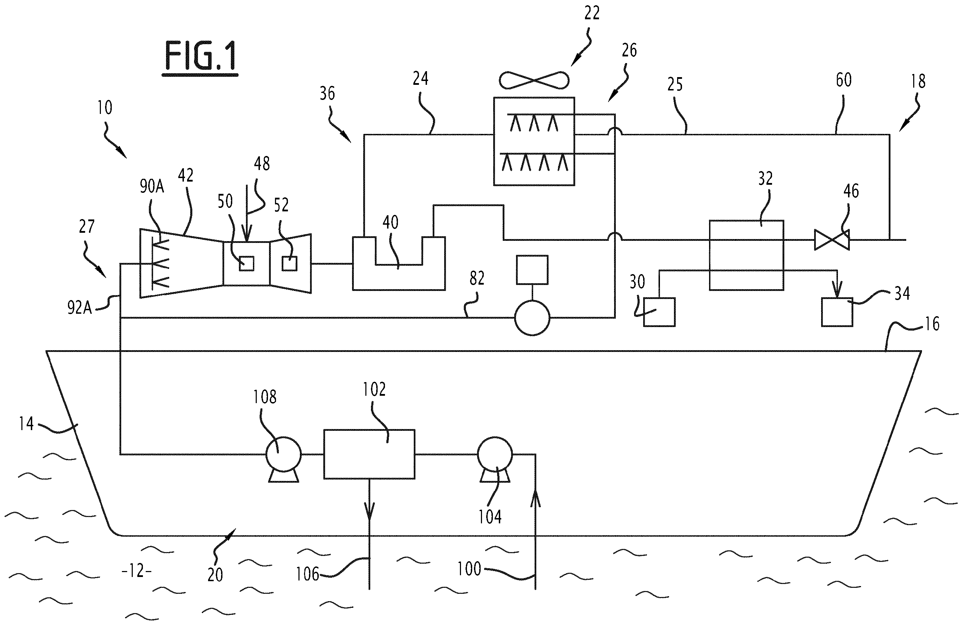

Une première installation 10 de liquéfaction de gaz naturel selon l'invention est illustrée schématiquement par la figure 1. L'installation 10 est destinée à être disposée à la surface d'une étendue d'eau 12.

L'étendue d'eau 12 est par exemple, une mer, un lac ou un océan. La profondeur de l'étendue d'eau 12 au droit de l'installation 10 est par exemple comprise entre 15 m et 3000 m.

L'installation 10 est propre à collecter du gaz naturel provenant d'un réservoir souterrain (non représenté). Le gaz naturel est produit directement sur l'installation 10. En variante, le gaz naturel est produit sur une autre unité de production à la surface de l'étendue d'eau 12 ou sur une unité de production à terre et est convoyé jusqu'à l'installation 10 par une ligne de transport.

L'installation 10 est avantageusement une installation flottante. En variante, l'installation 10 est fixée sur le fond de l'étendue d'eau par une structure immergée.

Dans l'exemple représenté sur la figure 1, l'installation 10 est une unité flottante de liquéfaction de gaz naturel, désignée par l'acronyme anglais « FLNG » pour« Floating Liquefied Natural Gas ».

L'installation 10 comporte une coque 14 flottant à la surface de l'étendue d'eau 12, et au moins un pont 16 porté par la coque 14. Le pont 16 est disposé au-dessus de la surface de l'étendue d'eau 12.

L'installation 10 comporte une unité 18 de liquéfaction de gaz naturel, dont les parties pertinentes sont représentées sur la figure 1, et un ensemble 20 de dessalement d'eau propre à produire de l'eau déminéralisée à partir d'eau salée prélevée dans l'étendue d'eau 12.

L'unité de liquéfaction de gaz naturel 18 est avantageusement disposée sur le pont 16 et l'ensemble de dessalement 20 est de préférence logé dans la coque 14.

L'unité de liquéfaction de gaz naturel 18 comporte au moins un échangeur thermique refroidi à l'air 22 destiné à refroidir un flux 24 circulant dans l'unité 18 pour produire un flux refroidi 25. Elle comporte selon l'invention un ensemble 26 de projection, dans l'échangeur thermique refroidi à l'air 22, d'eau déminéralisée provenant de l'ensemble de dessalement 20.

L'unité de liquéfaction 18 comporte en outre avantageusement un ensemble secondaire 27 de projection d'eau déminéralisée dans au moins un autre équipement de l'unité de liquéfaction 18, par exemple une turbine à gaz.

Dans cet exemple, l'unité de liquéfaction 18 comporte une source de gaz naturel 30 à refroidir, un échangeur thermique principal 32 de refroidissement du gaz naturel provenant de la source 30, et un système 34 de liquéfaction du gaz naturel refroidi issu de l'échangeur thermique principal 32.

L'unité de liquéfaction 18 comporte en outre au moins un cycle de refroidissement 36 de l'échangeur thermique principal 32, le cycle de refroidissement 36 intégrant l'échangeur thermique refroidi à l'air 22.

La source de gaz naturel 30 est reliée à l'installation de production de gaz naturel, avantageusement par l'intermédiaire d'unités de purification du gaz naturel destinées à extraire l'eau, , les composés lourds (par exemple les composés en C6+) et les composés soufrés.

L'échangeur thermique principal 32 est propre à mettre en relation d'échange thermique sans contact le gaz naturel à refroidir provenant de la source 30 avec le fluide réfrigérant circulant dans le cycle de refroidissement 36, pour faire baisser la température du gaz naturel.

Le système de liquéfaction du gaz naturel 34 comporte avantageusement au moins un organe de détente (non représenté) du gaz naturel refroidi. Il comporte au moins un réservoir de collecte du gaz naturel liquéfié.

Le réservoir de collecte et stockage de GNL est propre à être raccordé à un méthanier ou autre barge de transport pour évacuer le gaz naturel liquéfié produit dans l'unité de liquéfaction 18.

Le cycle de refroidissement 36 comporte, dans le sens de circulation du fluide réfrigérant depuis la sortie de l'échangeur thermique principal 32, un compresseur 40 le plus souvent couplé à une turbine à gaz 42, et l'échangeur thermique refroidi à l'air 22. Le cycle de refroidissement 36 comprend en outre un organe de détente 46 du fluide réfrigérant.

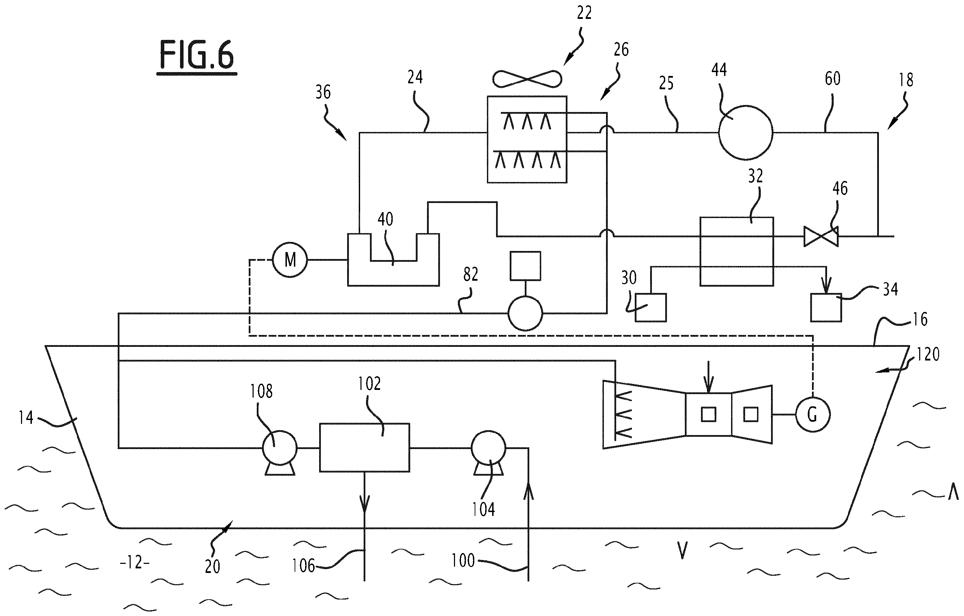

Le compresseur 40 peut aussi être entraine par un moteur électrique tel que représenté en variante sur la figure 6. Dans ce cas, les turbines à gaz de production électrique, qui peuvent être installées dans la coque, peuvent bénéficier également d'une injection d'eau améliorant leur performance.

Le compresseur 40 est propre à récupérer le fluide réfrigérant réchauffé issu de l'échangeur thermique principal 32 et à le recomprimer. Dans cet exemple, il est entraîné par la turbine à gaz 42.

La turbine à gaz 42 comporte une injection de combustible 48, une chambre de combustion 50 recevant le combustible, un compresseur d'air dans la partie amont de la turbine à gaz 42 et une turbine aval 52.

L'organe de détente 46 est ici une vanne de détente statique. En variante, l'organe de détente 46 est une turbine de détente dynamique. L'organe de détente 46 est propre à détendre et à liquéfier le flux refroidi 60 issu de l'échangeur thermique intermédiaire 44 avant son introduction dans l'échangeur thermique principal 32.

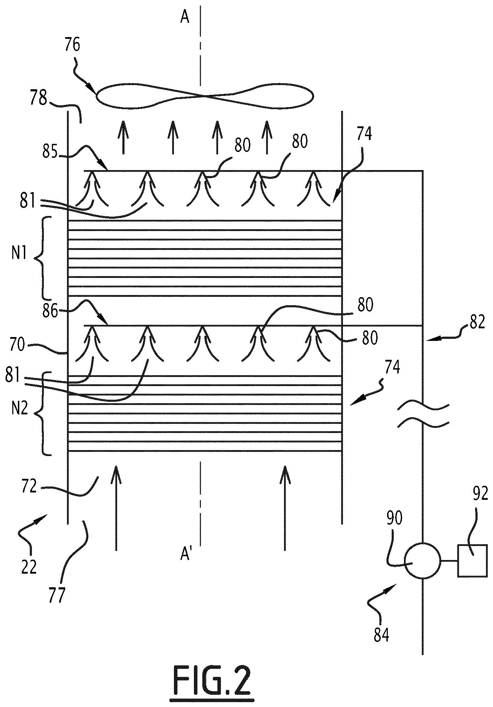

En référence à la figure 2, l'échangeur thermique refroidi à l'air 22 comporte une enveloppe 70 définissant un conduit interne 72 de circulation d'un flux gazeux suivant un axe local A-A', s'étendant entre une entrée d'air 77 et une sortie d'air 78.

Le flux d'air pénétrant dans l'enveloppe par l'entrée d'air 77 est aux conditions atmosphériques. Après passage dans l'échangeur thermique, le flux d'air extrait par la sortie d'air 78 présente une température plus élevée qu'à l'entrée d'air 77. Il est chargé en vapeur d'eau et sans eau libre.

L'échangeur thermique refroidi à l'air 22 comporte en outre un faisceau de tubes 74 traversant le conduit interne 72 pour faire circuler le flux à refroidir 24 à travers le conduit interne 72 et au moins un ventilateur 76, propre à réaliser l'entraînement du flux gazeux à travers le conduit interne 72 autour des tubes du faisceau de tubes 74.

Le faisceau de tubes 74 comprend une pluralité de tubes destinés à convoyer le flux à refroidir 24 à travers le conduit interne 72. Les tubes sont propres à placer le flux à refroidir 24 en relation d'échange thermique sans contact avec le flux gazeux circulant dans le conduit interne.

Dans cet exemple, les tubes du faisceau de tubes 74 s'étendent transversalement par rapport à l'axe de circulation A-A'. Ils sont disposés parallèlement les uns aux autres à plusieurs niveaux N1 à N2 le long de l'axe de circulation A-A'.

Dans l'exemple représenté sur la figure 2, l'axe de circulation A-A' s'étend verticalement. Les tubes du faisceau de tubes 74 s'étendent horizontalement à plusieurs niveaux N1 à N2 situés les uns au-dessus des autres le long de l'axe vertical.

Les tubes du faisceau de tubes 74 contiennent exclusivement le flux 24 à refroidir. Les tubes peuvent êtres lisses sur leurs surfaces externes et/ou internes, ou être équipés de surfaces améliorées sous la forme de structures ou d'ailettes travaillées dans la masse de métal ou rapportées.

L'hélice du ventilateur 76 est disposée transversalement par rapport à l'axe de circulation A-A'. Dans cet exemple, l'hélice du ventilateur 76 est positionnée en aval du faisceau de tubes 74, par rapport au sens de circulation du gaz à la sortie du conduit 72 défini par l'enveloppe 70. En variante, l'hélice du ventilateur 76 est disposée en amont du faisceau de tubes 74 par rapport au sens de circulation de gaz.

Lorsqu'elle est entrainée en rotation, l'hélice du ventilateur 76 entraine le flux d'air circulant dans le conduit 72, d'amont en aval autour des tubes du faisceau de tubes 74.

L'hélice du ventilateur 76 est ici disposée au-dessus des tubes du faisceau de tubes 74. Elle est propre à engendrer un flux d'air circulant de bas en haut dans le conduit 72.

L'ensemble de projection 26 comporte une pluralité de buses 80 de projection d'eau déminéralisée provenant de l'ensemble de dessalement 20, dirigées vers les tubes du faisceau de tubes 74, pour projeter de l'eau déminéralisée liquide au contact des tubes du faisceau de tubes 74.

L'eau est ici projetée sous forme de jets issus des buses 80. Les jets issus des buses 80 sont projetés directement sur les tubes du faisceau de tubes 74.

L'ensemble de projection 26 comprend en outre une conduite 82 d'amenée d'eau déminéralisée vers les buses 80 et une unité de commande 84 du débit d'eau projeté par la ou par chaque buse de projection 80 sur les tubes du faisceau de tubes 74.

Dans l'exemple non limitatif représenté sur la figure 2, l'ensemble de projection 26 comporte au moins une première rampe 85 de buses situées en regard d'un premier niveau de tubes du faisceau de tubes 74, et au moins une deuxième rampe 86 de buses 80 situées en regard d'un deuxième niveau de tubes du faisceau de tubes 74 décalé axialement le long de l'axe de circulation A-A' par rapport au premier niveau.

Ainsi, la distribution d'eau par les buses 80 est étagée le long de l'axe de circulation A-A'.

Dans l'exemple représenté sur la figure 2, toutes les buses 80 sont disposées à l'intérieur du conduit interne 72 défini par l'enveloppe tubulaire 70. Chaque buse 80 est placée directement en regard d'un tube du faisceau de tubes 74 pour projeter directement de l'eau sur les tubes.

Au moins une partie des buses 80 débouche entre deux tubes du faisceau de tubes 74.

Les buses 80 sont ici dirigées vers le bas pour engendrer des jets d'eau chutant sur les tubes du faisceau de tubes 74 par gravité.

La conduite d'amenée 82 est raccordée en amont à l'ensemble de dessalement 20, pour être alimentée par de l'eau déminéralisée:
L'unité de commande 84 comprend au moins une vanne de réglage de débit 90 dans la conduite 82 et une centrale de commande 92, propre à régler le débit d'eau fourni aux buses 80 par l'intermédiaire de la vanne de réglage de débit 90 pour que l'eau issue des buses 80 qui entre en contact sous forme liquide avec les tubes du faisceau de tubes 74, soit totalement évaporée, évitant ainsi un excès d'eau déminéralisée liquide issue de l'ensemble de projection d'eau 26 en aval du faisceau de tubes 74.

Les jets d'eau pulvérisée par les buses 80 sont dirigés exclusivement vers la surface des tubes du faisceau de tubes 74. Ils sont propres à atteindre la surface des tubes du faisceau de tubes 74 sous forme liquide, et à s'y évaporer totalement.

Ainsi, pour éviter un bassin de collecte et pour bénéficier d'une utilisation optimale de l'eau, aucune eau n'est entraînée en aval au-delà du faisceau de tubes 74. En variante, une faible proportion de l'eau projetée par les buses 80 en eau libre est entrainée. En tout état de cause, aucune accumulation de liquide résultant de la projection d'eau par les buses 80 ne se produit en aval du faisceau de tubes 74.

En référence à la figure 1, l'ensemble secondaire de projection 27 comporte au moins une buse secondaire 90A de projection débouchant dans la turbine à gaz 42 et une conduite 92A d'amenée d'eau déminéralisée dans la buse secondaire 90A.

Cette injection d'eau intermédiaire permet d'améliorer la performance de la turbine à gaz.

La turbine à gaz 42 qui entraine le compresseur de réfrigération 40 bénéficie d'une puissance augmentée par l'injection d'eau.

L'ensemble de dessalement 20 comporte une prise de prélèvement d'eau salée 100, une unité 102 de dessalement, et une pompe 104 amont d'amenée d'eau salée, disposée entre la prise de prélèvement d'eau salée 100 et l'unité de dessalement 102.

L'ensemble de dessalement 20 comporte en outre une sortie 106 d'évacuation de saumure vers l'étendue d'eau 12 et une pompe 108 d'évacuation d'eau déminéralisée vers les ensembles de projection d'eau 26, 27.

La prise d'eau 100 débouche vers le bas dans l'étendue d'eau 12. Elle est par exemple raccordée à une colonne montante (ou « riser » en anglais) telle que décrite dans l'une des demandes françaises FR3036412 ou FR3037343 de la Demanderesse.

L'unité de dessalement 102 comporte par exemple un système d'osmose inverse multi-étagé, un système de filtration et une finition (polishing en anglais).

Elle est propre à produire, à partir d'une eau de mer présentant une salinité généralement supérieure à 20 g/l, une eau déminéralisée présentant une salinité quasiment nulle (conductivité < 0,2 pS) et une saumure présentant une salinité supérieure à celle de la source. La saumure est propre à être évacuée par la sortie d'évacuation 106. L'eau déminéralisée est propre à être distribuée aux ensembles de projection 26, 27 par l'intermédiaire de la pompe 108.

La pompe 108 est raccordée en aval aux conduites d'amenée 82, 92A respectives.

Le fonctionnement de l'installation 10 de liquéfaction de gaz naturel selon l'invention va maintenant être décrit, en référence aux figures 1 et 2.

Initialement, du gaz naturel sous pression est produit à partir d'un réservoir souterrain, et est conduit jusqu'à la source 30 sur l'installation 10. Le gaz naturel est convoyé à travers l'échangeur thermique principal 32 pour entrer en relation d'échange thermique avec un fluide réfrigérant circulant dans le cycle de refroidissement 36.

Le gaz naturel est ainsi refroidi, par exemple jusqu'à une température entre -100°C et -164°C en fonction de la qualité du gaz et du procédé de liquéfaction. Dans le système de liquéfaction 34, le gaz naturel pourra subir une détente flash pour être liquéfié. Le gaz naturel liquéfié est récupéré dans un réservoir avant d'être évacué par l'intermédiaire d'un méthanier ou d'une barge.

Le fluide réfrigérant réchauffé issu de l'échangeur thermique principal 32 est amené au compresseur 40 pour y être compressé. Puis, il est convoyé sous forme d'un flux à refroidir 24 jusqu'à l'échangeur thermique refroidi à l'air 22 pour circuler dans les tubes du faisceau de tubes 74.

Simultanément, la pompe 104 de l'ensemble de dessalement 20 est activée pour pomper de l'eau salée à travers la prise d'eau 100 et l'amener à l'unité de dessalement 102. Dans l'unité de dessalement 102, l'eau salée est dessalée pour produire de l'eau déminéralisée et de la saumure. L'eau déminéralisée est pompée par la pompe 108 jusqu'aux conduites d'amenée 82, 92A.

Puis, l'ensemble de projection 26 est activé. De l'eau déminéralisée provenant de l'ensemble de dessalement 20 est convoyée jusqu'à chaque buse 80 pour engendrer des jets d'eau qui sont projetés directement sur les tubes du faisceau de tubes 74.

L'eau projetée sur les tubes s'évapore au contact de la surface extérieure des tubes, engendrant une puissance thermique de refroidissement du flux à refroidir 24 qui circule à travers les tubes du faisceau de tubes 74.

Ceci est particulièrement efficace lorsque les buses 80 sont réparties à différents niveaux du faisceau de tubes 74, par exemple sur la première rampe 85 est sur la deuxième rampe 86.

Le ventilateur 76 est également activé pour engendrer une circulation d'un flux d'air dans le conduit 72 le long de l'axe de circulation A-A, permettant d'évacuer la chaleur extraite.

L'eau résiduelle qui ne s'est pas évaporée sur un tube du faisceau de tubes 74 s'évapore progressivement dans le conduit 72, dans l'air qui se réchauffe progressivement.

L'unité de commande 84 pilote le débit d'eau circulant à travers la conduite d'amenée 82 pour qu'à la sortie du faisceau de tubes 74, toute l'eau projetée par les buses 80 se soit évaporée.

Le débit optimal d'eau fourni aux buses 80 est déterminé automatiquement de façon à satisfaire des valeurs de consignes en température du fluide à refroidir ou de froid à apporter dans le cas d'une condensation partielle. Le régime de fonctionnement du ou des ventilateurs 76 peut être associé à cette optimisation du débit d'eau. Le débit optimal d'eau peut en outre être prédit par calcul à chaque instant par l'unité de commande 84 en fonction des paramètres physiques de l'échangeur, de la température et/ou humidité de l'air ambiant, du débit d'air engendré par le ventilateur 76 et de la chaleur à évacuer côté procédé. Le nombre de buses en service peut être optimisé en fonction de la charge.

Ceci optimise l'efficacité du refroidissement par évaporation, tout en évitant la récupération d'eau libre en aval du faisceau de tubes 74.

Ce calcul de l'optimisation du débit est basé sur les algorithmes de calculs d'échanges thermiques qui ont servi à définir l'équipement.

Ainsi, le flux à refroidir 24 est refroidi de manière particulièrement efficace, avec un échangeur thermique refroidi à l'air 22 qui ne nécessite pas une tuyauterie encombrante d'amenée d'eau dans l'installation 10.

Une grande partie, voire la totalité des installations de production d'eau déminéralisée peuvent être localisées dans les zones séparées de celles de la production d'hydrocarbures, par exemple la coque du FLNG. La compacité de l'échangeur thermique de refroidissement à air 22 est donc optimale, ce qui augmente l'espace disponible pour les équipements de production ou de liquéfaction du gaz naturel. La capacité globale de l'installation 10 est donc augmentée.

Dans l'exemple représenté sur le figure 2, l'enveloppe 70 définit un conduit 72 vertical débouchant vers le bas en amont du faisceau de tubes 74.

En variante, les paramètres de conception sont optimisés en fonction des besoins, à savoir direction du flux d'air, nombre de faisceaux et de buses, le principe de contact direct d'eau liquide avec les tubes et son évaporation totale sur la surface étant dans tous les cas respecté.

En variante, le flux d'air est entrainé de haut en bas dans le conduit 72.

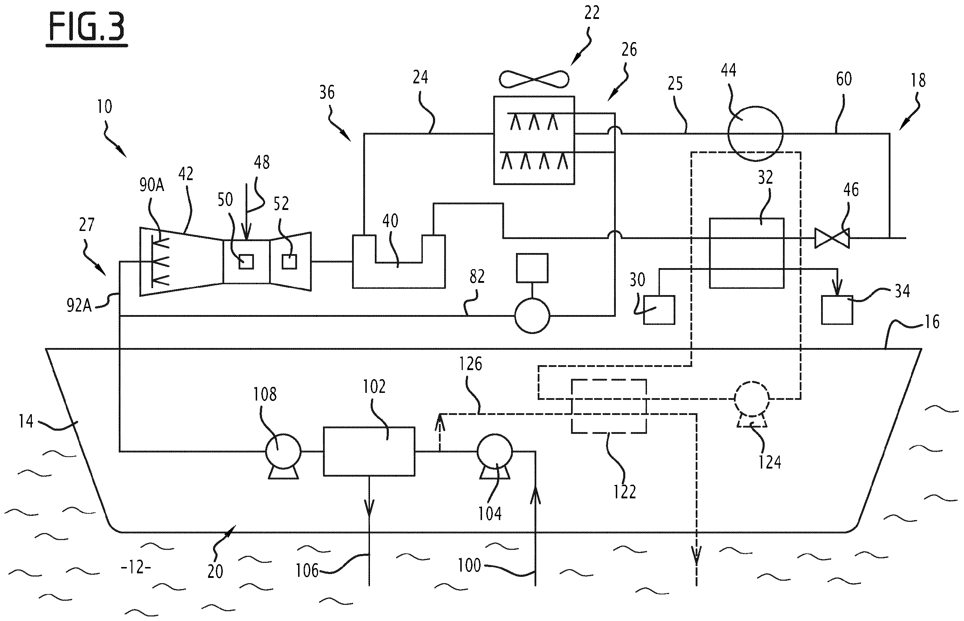

Lorsque la température qu'il est possible d'obtenir avec ce procédé par évaporation directe est sensiblement plus élevée que la température qu'il est possible d'obtenir avec de l'eau de réfrigération (eau de mer directe ou eau douce refroidie à l'eau de mer), le flux refroidi 25 issu de l'échangeur 22 est convoyé vers un échangeur thermique intermédiaire 44 intégré dans le cycle pour subir un refroidissement complémentaire, avant d'être détendu dans l'organe de détente 46, pour être réintroduit dans l'échangeur thermique principal 32. Ceci est représenté sur la figure 3.

Le procédé de réfrigération redevient dans ce cas équivalent en terme d'énergie ou de production à ce qu'il serait avec une réfrigération conventionnelle à l'eau, mais avec l'avantage d'avoir réduit considérablement les besoins en eau de réfrigération conventionnelle.

L'échangeur thermique 44 est refroidi par de l'eau de mer de l'étendue d'eau 12 tel que représenté sur la figure 3.

Dans la variante de la figure 3 avec refroidissement complémentaire, l'unité de liquéfaction 18 comporte un cycle additionnel de refroidissement 120 intégrant l'échangeur thermique intermédiaire 44 dans lequel se réchauffe le fluide de refroidissement.

Le cycle additionnel de refroidissement 120, représenté sur la figure 3, comporte en outre un échangeur thermique primaire 122 destiné au refroidissement du fluide de refroidissement après son passage dans l'échangeur thermique intermédiaire 44 et une pompe additionnelle 124 propre à pomper le fluide de refroidissement issu de l'échangeur thermique additionnel 44 dans l'échangeur thermique primaire 122.

L'échangeur thermique primaire 122 est également alimenté par une conduite 126 de circulation d'eau salée provenant de la prise de prélèvement d'eau salée 100.

La conduite de circulation 126 est piquée en aval de la pompe 104 et en amont de l'unité de dessalement 102. Elle passe à travers l'échangeur thermique 122 pour placer en relation d'échange thermique sans contact l'eau de mer récupérée par la prise de prélèvement d'eau salée 100 et le fluide de refroidissement provenant de la pompe 124.

La conduite de circulation 126 débouche en aval dans l'étendue d'eau 12.

En fonctionnement, de l'eau salée provenant de l'étendue d'eau 12 est prélevée à travers la prise de prélèvement d'eau salée 100 et est dérivée partiellement par l'intermédiaire de la pompe 104 vers la conduite de circulation 126. L'eau salée se réchauffe en refroidissant le fluide de refroidissement circulant dans l'échangeur thermique primaire 122, avant son passage dans l'échangeur thermique intermédiaire 44.

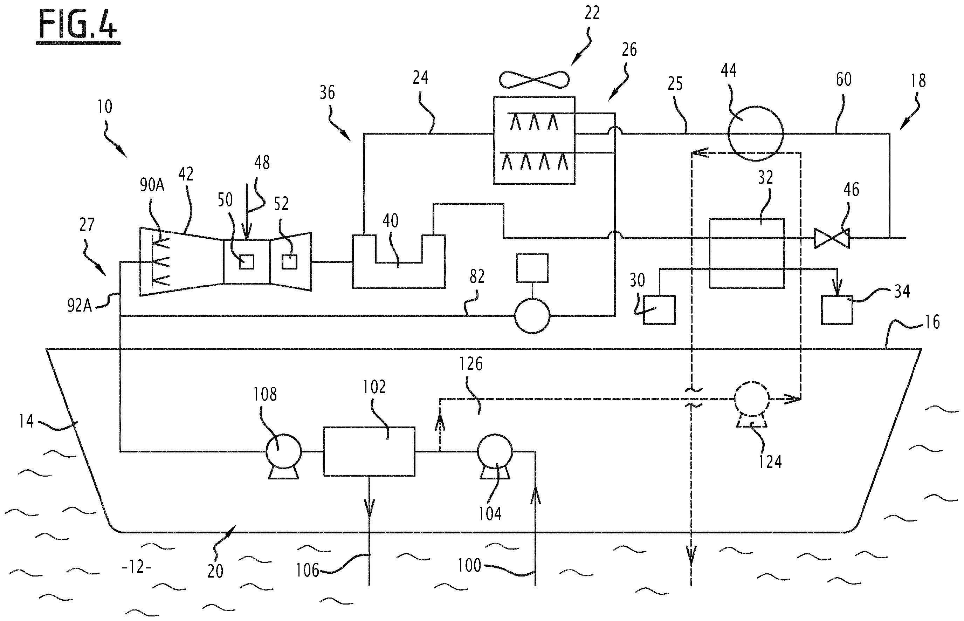

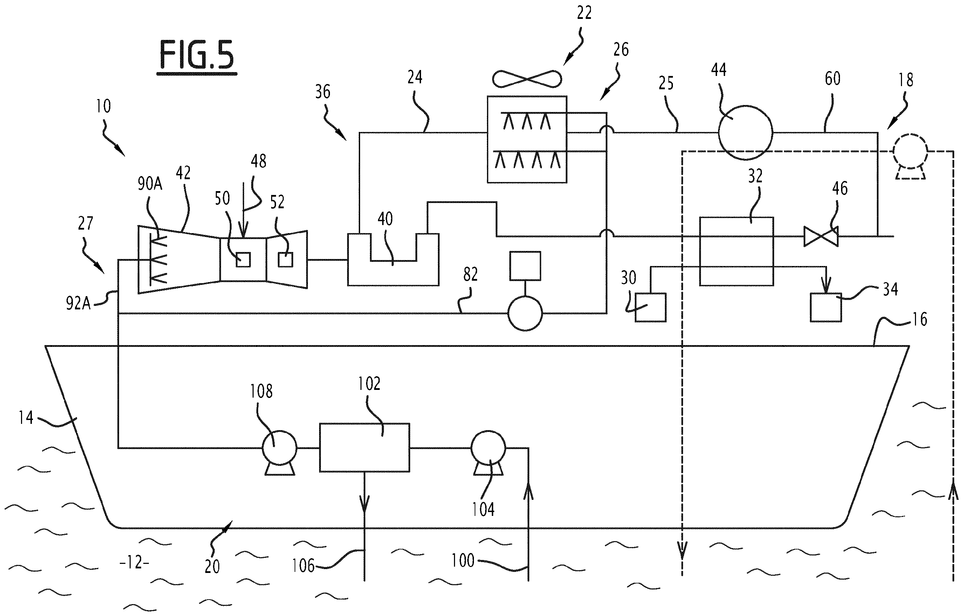

En variante de la figure 3, l'échangeur thermique 44 est refroidi directement par de l'eau de mer tel que représenté sur les figures 4 et 5.

Dans l'exemple de la figure 4, l'eau de mer assurant la réfrigération de l'échangeur 44 est pompée depuis la canalisation d'amenée de mer au système de dessalement 102, par la pompe 124. La conduite de circulation d'eau de mer débouche en aval dans l'étendue d'eau 12.

Dans l'exemple de la figure 5, l'eau de mer assurant la réfrigération de l'échangeur 44 est pompée depuis une pomperie externe indépendante de la coque, montée en porte à faux sur le module comportant l'échangeur 44.

## Revendications

1. - Installation (10) de liquéfaction de gaz naturel, disposée en surface d'une étendue d'eau (12), comportant :
- au moins un échangeur thermique refroidi à l'air (22), l'échangeur thermique refroidi à l'air (22) comportant un faisceau de tubes (74) propre à recevoir un flux à refroidir (24) et un ventilateur (76), propre à faire circuler un flux d'air (77) à travers le faisceau de tubes (74) ;
- un ensemble de projection (26) d'eau ;
- un ensemble de dessalement (20) comportant une prise de prélèvement d'eau salée (100) dans l'étendue d'eau (12), l'ensemble de dessalement (20) étant raccordé en aval à l'ensemble de projection (26) d'eau,
**caractérisé par** :
l'ensemble de projection (26) d'eau comportant au moins une buse de projection (80) débouchant dans le faisceau de tubes (74), la ou chaque buse de projection (80) étant dirigée vers les tubes du faisceau de tubes (74) pour projeter de l'eau déminéralisée liquide provenant de l'ensemble de dessalement (20) au contact des tubes du faisceau de tubes (74),
le faisceau de tubes (74) présentant plusieurs niveaux de tubes, l'ensemble de projection (26) d'eau comportant au moins une première buse de projection (80) débouchant en regard des tubes d'un premier niveau de tubes et au moins une deuxième buse de projection (80) débouchant en regard des tubes d'un deuxième niveau de tubes.

2. - Installation (10) selon la revendication 1, dans laquelle l'échangeur thermique refroidi à l'air (22) comporte une enveloppe (70) définissant un conduit interne (72) de circulation d'un flux gazeux, le faisceau de tubes (74) étant reçu dans le conduit interne (72), au moins une buse de projection (80) débouchant dans le conduit interne (72) défini par l'enveloppe (70).

3. - Installation (10) selon l'une quelconque des revendications précédentes, dans laquelle le ventilateur (76) est propre à faire circuler l'air de bas en haut, de haut en bas ou transversalement à travers le ou les faisceaux de tubes.

4. - Installation (10) selon l'une quelconque des revendications précédentes, dans laquelle l'ensemble de projection (26) d'eau comporte une unité de commande (84) du débit d'eau projeté par la ou par chaque buse de projection (80), l'unité de commande (84) étant propre à régler le débit d'eau pour empêcher la circulation d'eau déminéralisée liquide issue de l'ensemble de projection (26) d'eau en aval du faisceau de tubes (74).

5. - Installation (10) selon l'une quelconque des revendications précédentes, dans laquelle le ou chaque échangeur thermique refroidi à l'air (22) est disposé dans un cycle de refroidissement (36) comportant un fluide réfrigérant circulant à travers le faisceau de tubes (74), un compresseur (40) propre à comprimer le fluide réfrigérant en amont du faisceau de tubes (74), un organe de détente (46) du fluide réfrigérant disposé en aval du faisceau de tubes (74) et un échangeur thermique principal (32), propre à placer en relation d'échange thermique le fluide réfrigérant avec un fluide de procédé à refroidir.

6. - Installation (10) selon la revendication 5, dans laquelle le cycle de refroidissement (36) comporte un échangeur thermique intermédiaire (44), interposé entre l'échangeur thermique refroidi à l'air (22) et l'organe de détente (46), l'échangeur thermique intermédiaire (44) étant alimenté par un fluide de refroidissement propre à entrer en relation d'échange thermique avec un flux d'eau salée provenant de la prise de prélèvement d'eau salée (100), par un flux d'eau salée provenant de la prise de prélèvement d'eau salée (100) ou/et par un flux d'eau salée provenant d'une pomperie d'eau de mer ne passant pas par la prise de prélèvement d'eau salée (100).

7. - Installation (10) selon l'une quelconque des revendications précédentes, comportant au moins une turbine à gaz (42), et au moins un ensemble secondaire de projection d'eau (27) raccordé à l'ensemble de dessalement (20), l'ensemble secondaire de projection d'eau (27) comportant au moins une buse secondaire (90) de projection d'eau déminéralisée provenant de l'ensemble de dessalement (20) dans la turbine à gaz (42).

8. - Installation (10) selon l'une quelconque des revendications précédentes, comportant une coque (14) et au moins un pont (16) situé au-dessus de la coque (14), l'échangeur thermique refroidi à l'air (22) étant situé sur le pont (16), l'ensemble de dessalement (20) étant disposé dans la coque (14).

9. - Installation (10) selon l'une quelconque des revendications précédentes, dans lequel la ou chaque buse (80) est propre à engendrer au moins un jet d'eau qui est projeté directement sur les tubes du faisceau de tubes (74).

10. - Procédé de refroidissement d'un flux, comportant les étapes suivantes :
- circulation d'un flux à refroidir (24) dans un faisceau de tubes (74) d'un échangeur thermique refroidi à l'air (22) d'une installation (10) selon l'une quelconque des revendications précédentes ;
- alimentation de l'ensemble de projection (26) d'eau par de l'eau déminéralisée produite dans l'ensemble de dessalement (20) ;
- projection d'eau déminéralisée par au moins une buse de projection (80) débouchant en regard des tubes du faisceau de tubes (74), la buse de projection (80) étant dirigée vers les tubes du faisceau de tubes (74) pour projeter de l'eau déminéralisée liquide provenant de l'ensemble de dessalement (20) au contact des tubes du faisceau de tubes (74),
- évaporation totale de l'eau déminéralisée projetée.

11. - Procédé selon la revendication 10, dans lequel le faisceau de tubes (74) présente au moins un premier niveau de tubes et un deuxième niveau de tubes, le procédé comportant la projection d'eau déminéralisée provenant de l'ensemble de dessalement (20) par au moins une première buse de projection (80) débouchant au premier niveau et simultanément par au moins une deuxième buse de projection (80) débouchant au deuxième niveau.

12. - Procédé selon la revendication 10 ou 11, comprenant le contrôle du débit d'eau projeté à travers la ou chaque buse de projection (80) pour empêcher la circulation d'eau déminéralisée liquide issue de l'ensemble de projection (26) d'eau en aval du faisceau de tubes (74).

13. - Procédé selon l'une quelconque des revendications 10 à 12, comprenant le pompage d'eau salée à travers la prise de prélèvement d'eau salée (100), l'amenée de l'eau salée dans l'ensemble de dessalement (20), la production d'eau déminéralisée à partir de l'ensemble de dessalement (20), pour l'alimentation de l'ensemble de projection (26) d'eau.

14. - Procédé selon l'une quelconque des revendications 10 à 13, dans lequel l'eau déminéralisée provenant de l'ensemble de dessalement (20) est convoyée jusqu'à la ou chaque buse (80) pour engendrer des jets d'eau qui sont projetés directement sur les tubes du faisceau de tubes (74),
l'eau projetée sur les tubes du faisceau de tubes (74) s'évaporant au contact de la surface extérieure des tubes du faisceau de tubes (74), engendrant une puissance thermique de refroidissement du flux à refroidir (24) qui circule à travers les tubes du faisceau de tubes (74).

## Patentansprüche

1. Anlage (10) zur Verflüssigung von Erdgas, die auf der Oberfläche eines Gewässers (12) angeordnet ist, umfassend:
- mindestens einen luftgekühlten Wärmetauscher (22), der luftgekühlte Wärmetauscher (22) umfassend ein Rohrbündel (74), das geeignet ist, einen zu kühlenden Strom (24) aufzunehmen, und einen Lüfter (76), der geeignet ist, um einen Luftstrom (77) durch das Rohrbündel (74) zirkulieren zu lassen;
- eine Spritzanordnung (26) für Wasser;
- eine Entsalzungsanordnung (20), umfassend einen Entnahmeanschluss für Salzwasser (100) aus dem Gewässer (12), wobei die Entsalzungsanordnung (20) stromabwärts an die Spritzanordnung (26) für Wasser angeschlossen ist, **gekennzeichnet durch**:
die Spritzanordnung (26) für Wasser, umfassend mindestens eine Spritzdüse (80), die in das Rohrbündel (74) mündet, wobei die oder jede Spritzdüse (80) auf die Rohre des Rohrbündels (74) gerichtet ist, um flüssiges entmineralisiertes Wasser aus der Entsalzungsanordnung (20) in Kontakt mit den Rohren des Rohrbündels (74) zu spritzen,
das Rohrbündel (74), das mehrere Ebenen von Rohren aufweist, die Spritzanordnung (26) für Wasser umfassend mindestens eine erste Spritzdüse (80), die gegenüber den Rohren einer ersten Ebene von Rohren mündet, und mindestens eine zweite Spritzdüse (80), die gegenüber den Rohren einer zweiten Ebene von Rohren mündet.

2. Anlage (10) nach Anspruch 1, wobei der luftgekühlte Wärmetauscher (22) einen Mantel (70) umfasst, der eine innere Leitung (72) zur Zirkulation eines Gasstroms definiert, wobei das Rohrbündel (74) in der inneren Leitung (72) aufgenommen ist und mindestens eine Spritzdüse (80) in die durch den Mantel (70) definierte innere Leitung (72) mündet.

3. Anlage (10) nach einem der vorherigen Ansprüche, wobei der Lüfter (76) geeignet ist, um die Luft von unten nach oben, von oben nach unten oder quer durch das oder die Rohrbündel zirkulieren zu lassen.

4. Anlage (10) nach einem der vorherigen Ansprüche, wobei die Spritzanordnung (26) für Wasser eine Steuereinheit (84) für die Durchflussmenge von Spritzwasser umfasst, der von der oder jeder Spritzdüse (80) gespritzt wird, wobei die Steuereinheit (84) geeignet ist, um die Durchflussmenge von Spritzwasser zu regulieren, um die Zirkulation von flüssigem entmineralisiertem Wasser aus der Spritzanordnung (26) für Wasser stromabwärts von dem Rohrbündel (74) zu verhindern.

5. Anlage (10) nach einem der vorherigen Ansprüche, wobei der oder jeder luftgekühlte Wärmetauscher (22) in einem Kühlkreislauf (36) angeordnet ist, umfassend ein durch das Rohrbündel (74) zirkulierendes Kühlfluid, einen Kompressor (40), der geeignet ist, um das Kühlfluid stromaufwärts von dem Rohrbündel (74) zu kühlen, ein Expansionsorgan (46) für das Kühlfluid, das stromabwärts von dem Rohrbündel (74) angeordnet ist, und einen Hauptwärmetauscher (32), der geeignet ist, um das Kühlfluid mit einem zu kühlenden Prozessfluid in Wärmeaustauschbeziehung zu bringen.

6. Anlage (10) nach Anspruch 5, wobei der Kühlzyklus (36) einen Zwischenwärmetauscher (44) umfasst, der zwischen den luftgekühlten Wärmetauscher (22) und das Expansionsorgan (46) eingefügt ist, wobei der Zwischenwärmetauscher (44) mit einem Kühlfluid versorgt wird, das geeignet ist, um in eine Wärmeaustauschbeziehung mit einem Salzwasserstrom aus der Salzwasserentnahme (100), mit einem Salzwasserstrom aus der Salzwasserentnahme (100) oder/und mit einem Salzwasserstrom aus einer Meerwasserpumpstation, der nicht durch die Salzwasserentnahme (100) fließt, zu kommen.

7. Anlage (10) nach einem der vorherigen Ansprüche, mindestens umfassend eine Gasturbine (42) und mindestens eine sekundäre Spritzanordnung (27) für Wasser, die an die Entsalzungsanordnung (20) angeschlossen ist, die sekundäre Spritzwasseranordnung (27) umfassend mindestens eine sekundäre Düse (90) zum Spritzen von entmineralisiertem Wasser aus der Entsalzungsanordnung (20) in die Gasturbine (42).

8. Anlage (10) nach einem der vorherigen Ansprüche, umfassend eine Schale (14) und mindestens eine Brücke (16), die sich über der Schale (14) befindet, wobei der luftgekühlte Wärmetauscher (22) auf der Brücke (16) ist und die Entsalzungsanordnung (20) in der Schale (14) angeordnet ist.

9. Anlage (10) nach einem der vorherigen Ansprüche, wobei die oder jede Düse (80) geeignet ist, um mindestens einen Wasserstrahl zu erzeugen, der direkt auf die Rohre des Rohrbündels (74) gespritzt wird.

10. Verfahren zum Kühlen eines Stroms, umfassend die folgenden Schritte:
- Zirkulieren eines zu kühlenden Stroms (24) in einem Rohrbündel (74) eines luftgekühlten Wärmetauschers (22) einer Anlage (10) nach einem der vorherigen Ansprüche;
- Versorgen der Spritzanordnung (26) für Wasser mit demineralisiertem Wasser, das in der Entsalzungsanordnung (20) erzeugt wird;
- Spritzen von entmineralisiertem Wasser durch mindestens eine Spritzdüse (80), die gegenüber den Rohren des Rohrbündels (74) mündet, wobei die Spritzdüse (80) auf die Rohre des Rohrbündels (74) gerichtet ist, um flüssiges entmineralisiertes Wasser aus der Entsalzungsanordnung (20) in Kontakt mit den Rohren des Rohrbündels (74) zu spritzen,
- vollständiges Verdunsten des gespritzten entmineralisierten Wassers.

11. Verfahren nach Anspruch 10, wobei das Rohrbündel (74) mindestens eine erste Ebene von Rohren und eine zweite Ebene von Rohren aufweist, das Verfahren umfassend das Spritzen von entmineralisiertem Wasser aus der Entsalzungsanordnung (20) durch mindestens eine erste Spritzdüse (80), die in die erste Ebene mündet, und gleichzeitig durch mindestens eine zweite Spritzdüse (80), die in die zweite Ebene mündet.

12. Verfahren nach Anspruch 10 oder 11, umfassend das Steuern der Durchflussmenge des durch die oder jede Spritzdüse (80) gespritzten Wassers, um die Zirkulation von flüssigem, demineralisiertem Wasser aus der Spritzanordnung (26) für Wasser stromabwärts von dem Rohrbündel (74) zu verhindern.

13. Verfahren nach einem der Ansprüche 10 bis 12, umfassend das Pumpen von Salzwasser durch den Salzwasserentnahmeanschluss (100), das Zuführen des Salzwassers in die Entsalzungsanordnung (20), das Erzeugen von entmineralisiertem Wasser aus der Entsalzungsanordnung (20), um die Spritzanordnung (26) für Wasser zu versorgen.

14. Verfahren nach einem der Ansprüche 10 bis 13, wobei entmineralisiertes Wasser aus der Entsalzungsanordnung (20) zu der oder jeder Düse (80) gefördert wird, um Wasserstrahlen zu erzeugen, die direkt auf die Rohre des Rohrbündels (74) gespritzt werden,
das auf die Rohre des Rohrbündels (74) gespritzte Wasser bei Kontakt mit der Außenfläche der Rohre des Rohrbündels (74) verdampft, wodurch eine Wärmeleistung zur Kühlung des zu kühlenden Stroms (24) erzeugt wird, der durch die Rohre des Rohrbündels (74) zirkuliert.

## Claims

1. A natural gas liquefaction installation (10), arranged at the surface of a body of water (12), including:
- at least one air-cooled heat exchanger (22), the air-cooled heat exchanger (22) including a tube bundle (74) capable of receiving a flow to be cooled (24), and a fan (76) capable of causing a flow of air (77) to circulate across the bundle of tubes (74);
- a water spraying assembly (26);
- a desalination assembly (20) including a salt water pickup (100) in the body of water (12), the desalination assembly (20) being coupled downstream to the water-spraying assembly (26),
**characterized by**:
the water-spraying assembly (26) including at least one spray nozzle (80) emerging in the tube bundle (74), the or each spray nozzle (80) being directed towards the tubes of the tube bundle (74) so as to spray liquid demineralized water coming from the desalination assembly (20) into contact with the tubes of the tube bundle (74).
the tube bundle (74) having several levels of tubes, the water-spraying assembly (26) including at least a first spray nozzle (80) emerging across from the tubes of a first level of tubes and at least one second spray nozzle (80) emerging across from the tubes of a second level of tubes.

2. The installation (10) according to claim 1, wherein the air-cooled heat exchanger (22) includes an enclosure (70) defining an inner circulation pipe (72) for a gas flow, the bundle of tubes (74) being received in the inner pipe (72), at least one spray nozzle (80) emerging in the inner pipe (72) defined by the enclosure (70).

3. The installation (10) according to any one of the preceding claims, wherein the fan (76) is capable of circulating air from bottom to top, from top to bottom, or transversely through the bundle(s) of tubes.

4. The installation (10) according to any one of the preceding claims, wherein the water-spraying assembly (26) includes a control unit (84) for controlling the flow rate of water sprayed by the or each spray nozzle (80), the control unit (84) being able to adjust the water flow rate in order to prevent the circulation of liquid demineralized water from the water-spraying assembly (26) downstream from the tube bundle (74).

5. The installation (10) according to any one of the preceding claims, wherein the or each air-cooled heat exchanger (22) is arranged in a cooling cycle (36) including a coolant circulating through the tube bundle (74), a compressor (40) capable of compressing the coolant upstream from the tube bundle (74), an expansion member (46) of the coolant arranged downstream from the tube bundle (74) and a main heat exchanger (32), capable of placing the coolant in a heat exchange relationship with a process fluid to be cooled.

6. The installation (10) according to claim 5, wherein the cooling cycle (36) includes an intermediate heat exchanger (44), inserted between the air-cooled heat exchanger (22) and the expansion member (46), the intermediate heat exchanger (44) being supplied by a coolant capable of entering into a heat exchange relationship with a flow of salt water coming from the salt water pickup (100), by a flow of salt water coming from the salt water pickup (100) and/or by a flow of salt water coming from a salt water pump not passing through the salt water pickup (100).

7. The installation (10) according to any one of the preceding claims, including at least one gas turbine (42), and at least one secondary water-spraying assembly (27) connected to the desalination assembly (20), the secondary water-spraying assembly (27) including at least one secondary demineralized water-spraying nozzle (90) to spray demineralized water coming from the desalination assembly in the gas turbine (42).

8. The installation (10) according to any one of the preceding claims, including a hull (14) and at least one deck (16) located above the hull (14), the air-cooled heat exchanger (22) being located on the deck (16), the desalination assembly (20) being arranged in the hull (14).

9. The installation (10) according to any one of the preceding claims, wherein the or each nozzle (80) is able to create at least one water jet that is sprayed directly on the tubes of the tube bundle (74).

10. A method for cooling a flow, including the following steps:
- circulation of a flow to be cooled (24) in a bundle of tubes (74) of an air-cooled heat exchanger (22) of an installation (10) according to any one of the preceding claims;
- supply of the water-spraying assembly (26) with demineralized water produced in the desalination assembly (20);
- spraying of demineralized water by at least one spray nozzle (80) emerging opposite the tubes of the tube bundle (74), the spray nozzle (80) being directed towards the tubes of the tube bundle (74) in order to spray liquid demineralized water coming from the desalination assembly (20) in contact with the tubes of the tube bundle (74),
- total evaporation of the sprayed demineralized water.

11. The method according to claim 10, wherein the tube bundle (74) has at least a first level of tubes and a second level of tubes, the method including the spraying of demineralized water coming from the desalination assembly (20) through at least a first spray nozzle (80) emerging at the first level and simultaneously through at least a second spray nozzle (80) emerging at the second level.

12. The method according to claim 10 or 11, comprising controlling the flow rate of water sprayed through the or each spray nozzle (80) to prevent circulation of liquid demineralized water coming from the water-spraying assembly (26) downstream from the tube bundle (74).

13. The method according to any one of claims 10 to 12, comprising pumping salt water through the salt water pickup (20), producing demineralized water from the desalination assembly (20), to supply the water-spraying assembly (26).

14. The method according to any one of claims 10 to 13, wherein the demineralized water coming from the desalination assembly (20) is conveyed to the or each nozzle (80) to create water jets that are sprayed directly onto the tubes of the tube bundle (74),
the water sprayed on the tubes of the tube bundle (74) evaporating in contact with the external surface of the tubes of the tube bundle (74), creating a cooling heating power of the flow to be cooled (24) that circulates through the tubes of the tube bundle (74).
